# EUROPEAN PATENT APPLICATION

(11) **EP 4 538 634 A1**
(43) Date of publication of application: **16.04.2025**
(21) Application number: 23819439.3
(22) Date of filing: 17.02.2023
(51) Int. Cl.: G01B 11/24, G01B 21/00, G01B 21/20

(54) **COMPONENT INSPECTION METHOD AND COMPONENT INSPECTION DEVICE**

(30) Priority: 09.06.2022 JP 2022093397
(71) Applicant: NISSAN MOTOR CO., LTD., Kanagawa 221-0023 (JP)
(72) Inventor: SUMI, Norikatsu, Atsugi-shi, Kanagawa 243-0123 (JP)
(74) Representative: Osha BWB
(86) International application number: PCT/JP2023/005664
(87) International publication number: WO 2023/238451

(57) **Abstract**

**COMPONENT INSPECTION METHOD AND COMPONENT INSPECTION DEVICE**

In a component inspection method, first, a region including an ignition coil (3) and a fuel tube (4) is scanned from outside by a three-dimensional laser scanner (5) to gradually obtain measurement data that includes a part of the outer surface of ignition coil (3) and fuel tube (4). Thereafter, the region including ignition coil (3) and fuel tube (4) in design data and the region including ignition coil (3) and fuel tube (4) in the measurement data are aligned, and the process degree of the scanning is calculated on the bases of this alignment. When the progress degree exceeds a progress degree threshold value, information is presented to a display (8) for indicating that the progress value threshold value has been exceeded.

## Description

### TECHNICAL FIELD

The present invention relates to a component inspection method and a component inspection device for performing inspection related to spatial arrangement state of at least one component as a target in an assembly formed by assembling a plurality of components.

### BACKGROUND TECHNOLOGY

In patent document 1, there is disclosed a component inspection method for inspecting a component by obtaining the outer shape of the component based on the measurement data of the component which is measured by a three-dimensional scanner and the design data of the component. In this method, when shape data is obtained by the three-dimensional scanner, it is necessary to irradiate laser beam to the entire outer surface of the component.

In the component inspection device of the patent document 1, there is problem that, since the laser beam is irradiated to the entire outer surface of the component, the time required for the component inspection is longer.

In addition, in recent years, there has been tendency that, for reasons such as blockage of laser beam by other components, the laser beam is not sufficiently irradiated to the outer surface of a target component, and the time required for the component inspection becomes long, in an assembly formed by assembling a plurality of components.

The present invention is made in consideration of such a problem, and an object of the present invention is to provide a component inspection method and a component inspection device capable of reducing the time required for the inspection of a target component in an assembly.

### PRIOR ART REFERENCE(S)

### PATENT DOCUMENT(S)

Patent Document 1 : Japanese Patent No. 6792927

### SUMMARY OF THE INVENTION

The present invention is a component inspection method for performing inspection related to a spatial arrangement state of at least one component as a target in an assembly formed by assembling a plurality of components, the method including: gradually obtaining a measurement data including a part of an outer surface of the target component by scanning a region including the target component from outside by a three-dimensional sensor; obtaining a design data including an outer shape of the target component and a positional relationship of the target component in the assembly; aligning the region including the target component in the design data with the region including the target component in the measurement data; calculating a progress degree which indicates a degree to which the scanning has progressed, based on the alignment; comparing the progress degree to a predetermined threshold value; and presenting an information that the progress degree exceeds the threshold value, when the progress degree exceeds the threshold value.

According to the present invention, by the scanning from outside, it is possible to reduce inspection time for a target component in an assembly.

### BRIEF DESCRIPTION OF THE DRAWINGS

FIG. 1 is an illustrative view when various components inside an engine room in one embodiment are viewed from the upper side.
FIG. 2 is a schematic diagram of a clearance inspection device in the present embodiment.
FIG. 3 is point group data of an engine room and components thereinside scanned by a three-dimensional laser scanner.
FIG. 4 is point group data of the engine room and the components thereinside in a progress degree of 40%.
FIG. 5 is an illustrative view regarding reliability degree.
FIG.6 is an illustrative view showing the indication of the displacement amount of a fuel tube in a display.
FIG. 7 is a flowchart showing a clearance inspection method of the present embodiment.

### MODE FOR IMPLEMENTING THE INVENTION

In the following, one embodiment of the present invention will be explained by referring to the drawings. The embodiment is one in which the present invention is applied to a clearance inspection for calculating the minimum clearance between two components within an engine room by specifying the spatial positions of the two components in a completed vehicle inspection process of a vehicle.

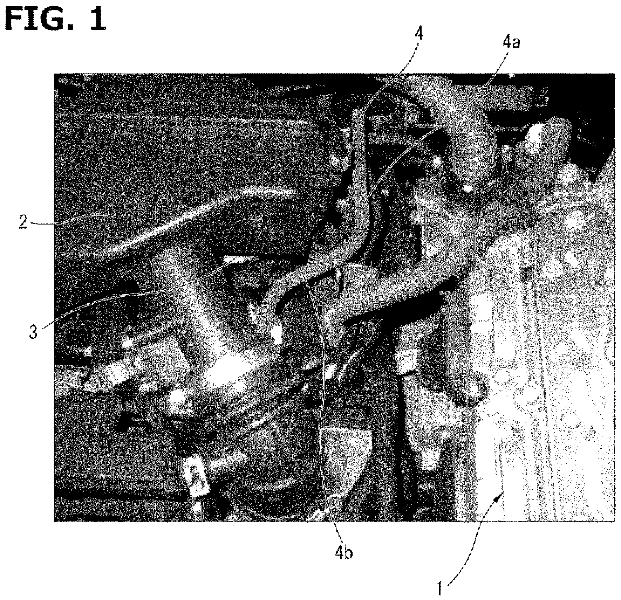

FIG. 1 is a drawing in which part of various components within an engine room 1 of a vehicle that is an assembly in one embodiment is viewed from the upper side, and there is shown a region close to an intake manifold 2 of an engine. An ignition coil 3 that is part of an ignitor of the engine is disposed on the lower side of intake manifold 2. In addition, a fuel tube 4 that is a pipe for supplying fuel to the engine is positioned on the side of intake manifold 2. Fuel tube 4 is formed from a metal tube in consideration of oil resistance and fire resistance, and has a circular shape in cross section along the radial direction. As shown in FIG. 1, fuel tube 4 has a straight section 4a substantially linearly extending along the side portion of intake manifold 2 and an inclination section 4b inclined toward ignition coil 3 from one end of straight section 4a. Fuel tube 4 formed from a metal tube is slightly deformed when being attached, and is therefore a component regarded as a non-rigid body. On the other hand, ignition coil 3 is a component regarded as a rigid body whose outer shape is not changed. The minimum spatial distance (minimum clearance) between ignition coil 3 and fuel tube 4 is defined by a law, and it is therefore necessary to inspect the minimum clearance in a completed vehicle inspection process. Here, in most cases, the minimum design distance between ignition coil 3 and fuel tube 4 is defined at a position of an outer surface that is not confirmed visually from the outside in at least one of ignition coil 3 and fuel tube 4, and the measurement with a ruler by an inspector is generally difficult. In the present embodiment, such a clearance between two components is obtained by the measurement from the outside by using a three-dimensional sensor and arithmetic processing.

In addition, in addition to intake manifold 2, ignition coil 3 and fuel tube 4, a plurality of components are provided within engine room 1. In the completed vehicle inspection process of a vehicle in the present embodiment, in a vehicle formed by assembling a plurality of components including ignition coil 3 that is a component as a rigid body and fuel tube 4 that is a component as a non-rigid body which is formed in consideration of shape deformation, the distance between ignition coil 3 and fuel tube 4 is inspected.

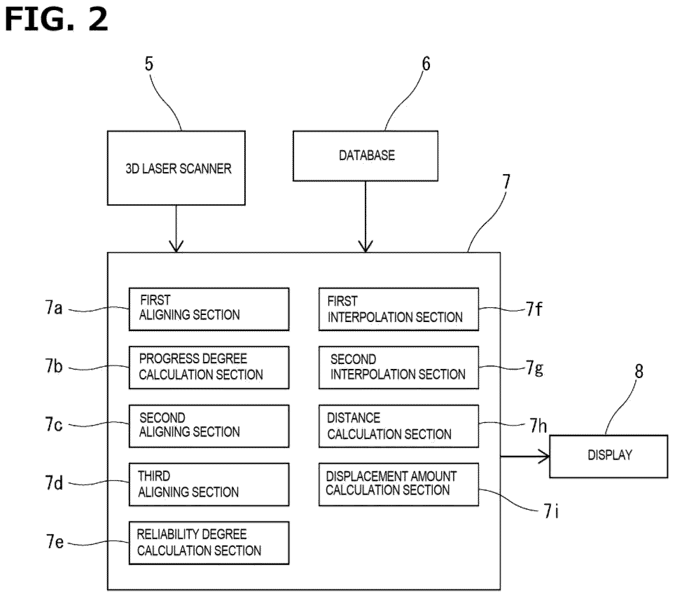

As shown in FIG. 2, the clearance inspection device of one embodiment which is used in a completed vehicle inspection process of a vehicle is mainly composed of a three-dimensional sensor such as a three-dimensional laser scanner 5, a database 6, a control device 7 and one or a plurality of displays (devices) 8. In addition, in the completed vehicle inspection process, a plurality of inspections are sequentially performed according to a predetermined sequence. The clearance inspection device in one embodiment is configured as part of an inspection device in the completed vehicle inspection process.

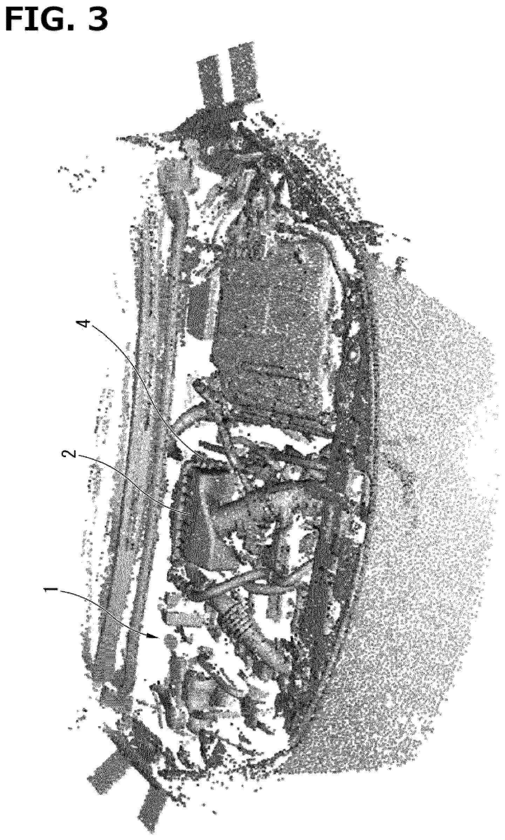

Three-dimensional laser scanner 5 is one which is capable of obtaining a three-dimensional coordinate of the surface shape of a measuring target in a manner that laser is irradiated on the measuring target and a reflection time is measured, and by performing the measurement at a high speed of substantially tens of thousands of points per second, a high-density point group data can be obtained. Although, as a three-dimensional laser scanner, various sizes and types have been known, in one embodiment, a hand-held type which allows a worker to perform scanning of a measuring target is used, and by manually scanning, from the outside, a region including ignition coil 3 and fuel tube 4 together with other components, the measurement of a target region is performed. By such a scanning performed by three-dimensional laser scanner 5, as shown in FIG. 3, the point group data of the entire region including part of the outer surfaces of ignition coil 3 and fuel tube 4 can be obtained.

In addition, although the point group data is actually obtained as a time-series data per frame by the scanning, the point group data of the entire region is obtained by being overlapped. In addition, it is preferable to perform a noise removal processing to the obtained point group data for removing noise caused, for example, by dust entered thereto at the time of the scanning. Moreover, the three-dimensional laser scanner may be one which requires a marker to be a standard to recognize a shape and position of a component as a target at the time of scanning.

Here, the "scanning" in the present invention is a concept including one or both of a planar scanning function owned by a three-dimensional sensor (for example, three-dimensional laser scanner 5) itself and movement of the three-dimensional sensor which is performed, for example, by a worker. In one embodiment, by using three-dimensional laser scanner 5 having the planar scanning function, and moving the three-dimensional laser scanner 5, the scanning is performed. For example, a plurality of three-dimensional sensors are disposed and fixed at proper positions inside a space, and point group data of a target region can also be obtained by the scanning function of each of the three-dimensional sensors, according to the size or shape of the target region to be measured or the type of the three-dimensional sensors.

All design data of a vehicle as an inspection target are stored in database 6. That is, the shape data of ignition coil 3 and the shape data of fuel tube 4 which are targets of the clearance inspection are stored in database 6 as design data together with data indicating the positional relationship of both of them within a space. Moreover, the data of the positional relationship and the data of the shapes of other components existing in the region are also stored in database 6. The design data is stored in database 6 in the form of CAD data constituting mesh. At the time of the clearance inspection, a required design data is read out from database 6 to control device 7. In addition, as to the design data, its data size may be reduced by performing a well-known hidden surface processing to a part other than a part related to the clearance between ignition coil 3 and fuel tube 4, after being read out to control device 7.

In control device 7, first, the design data of ignition coil 3 is aligned, as a rigid body, with the position of the measurement data of ignition coil 3 and the outer shape of ignition coil 3 including a hidden outer surface part is generated, and, furthermore, the design data of fuel tube 4 is aligned, as a non-rigid body, with the position of the measurement data of fuel tube 4 and various processes are performed to generate the outer shape of fuel tube 4 including a hidden outer surface part. Then, in control device 7, the distance between an optional point of ignition coil 3 and an optional point of fuel tube 4 is calculated based on the generated outer shapes of ignition coil 3 and fuel tube 4. Each component of control device 7 will be explained in detail later.

Display 8 displays a displacement amount (moving amount) required for fuel tube 4 and its location when the minimum distance calculated by control device 7 is less than a threshold value defined by a law.

From now on, each component of control device 7 will be explained. As shown in FIG. 2, control device 7 includes a first aligning section 7a, a progress degree calculation section 7b, a second aligning section 7c, a third aligning section 7d, a reliability degree calculation section 7e, a first interpolation section 7f, a second interpolation section 7g, a distance calculation section 7h and a displacement amount calculation section 7i.

First aligning section 7a performs rough alignment of an entire target region (region to be a so-called target in the alignment) including ignition coil 3, fuel tube 4 and other components in the measurement data obtained by three-dimensional laser scanner 5 with an entire target region (region to be a so-called reference in the alignment) including ignition coil 3, fuel tube 4 and other components in the design data stored in database 6. More specifically, first, aligning section 7a searches key points from the point group data of the entire region as a target by using FPFH algorithm, and describes the characters of the key points, such as normal vectors and relative angles around the key points. Moreover, after the design data of the entire region as reference is converted into point group data by using a wall-known conversion technique, first aligning section 7a similarly searches key points using FPFH algorithm, and describes the characters of the key points, such as normal vectors and relative angles around the key points. Then, first aligning section 7a compares normal vectors between the key points related to the target and the key points related to the reference and the relative angles with the surrounding point group to search for a combination of key points which constitute a pair whose normal vector and relative angle substantially identical, and then performs rough alignment of the point group data of the reference with the point group data of the target by using the combination of the key points as a pair. In addition, at the time of the rough alignment, fuel tube 4 that is a non-rigid body is regarded as a rigid body, and consequently, an average alignment is performed, for example, within the length of fuel tube 4. The rough alignment of the target region performed by first aligning section 7a is executed together with the scanning of the target region. First aligning section 7a may be one which performs rough alignment of a target region by using well-known algorithm other than FPFH algorithm.

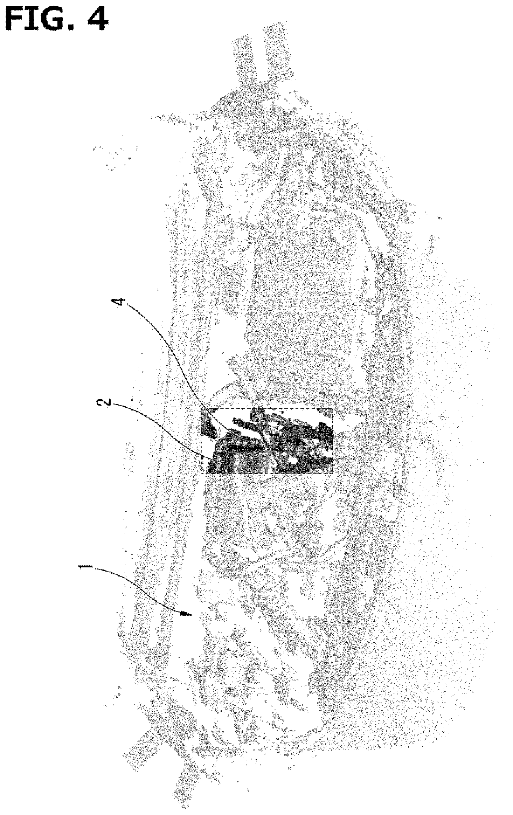

After the rough alignment performed by first aligning section 7a, progress degree calculation section 7b calculates the degree of progress which indicates how much the progress of the scanning required for the target region has been made, before performing the after-mentioned detailed alignment of ignition coil 3 and fuel tube 4. That is, progress degree calculation section 7b calculates the progress degree (degree of progress) of the scanning from the ratio of the number of points of point group data in the target region based on the design data as reference and the number of points matched to each other between the reference and the target by the rough alignment performed by first aligning section 7a. Moreover, progress degree calculation section 7b determines, by comparing the progress degree calculated in that way with a predetermined progress degree threshold value (for example, 40% in the present embodiment), whether or not a progress degree which gradually increases with the progress of the scanning exceeds the progress degree threshold value, in real time. For example, since the information of the progress degree at that time and the information on whether the progress degree exceeds the progress degree threshold value are displayed on display 8 via an information output section which is not shown in the drawings, a worker performs to continue the scanning by three-dimensional laser scanner 5 according to the display. In other words, the scanning (generation of point group data) by three-dimensional laser scanner 5, the rough alignment and the progress degree calculation are repeated, in real time, until exceeding a predetermined progress degree threshold value. For example, the region surrounded by a broken line in FIG. 4 corresponds to a progress degree of 40%.

In addition, the progress degree may be evaluated by the scanned distance by three-dimensional laser scanner5, the number of viewpoints where three-dimensional laser scanner 5 has passed, the number of key points used in the rough alignment or the like, in addition to the ratio of the number of points of the data mentioned above.

Since the basic shape or configuration of the region as a target of the scanning has already been known as design data obtained from database 6, it is possible to estimate a moving locus of three-dimensional laser scanner 5 including the position and the moving locus of three-dimensional laser scanner 5 within a space, based on the point group data sequentially obtained from three-dimensional laser scanner 5. Then, the progress degree of the scanning can be calculated based on how much of the scanned distance by three-dimensional laser scanner 5 is included relative to the length of the moving locus.

In addition, as to a viewpoint of a position of three-dimensional laser scanner 5, several representative viewpoints are predetermined, and the progress degree of the scanning can be obtained based on how many representative viewpoints three-dimensional scanner 5 has passed until drawing the moving locus.

Moreover, since the maximum number of the key points has already been determined based on the point group data converted from the design data, the progress degree of the scanning can be calculated by obtaining the percentage of key points based on the point group data converted from the measurement data to the maximum number of the key points.

Second aligning section 7c performs detailed alignment in space for each individual component under a condition that the progress degree is greater than 40%. That is, second aligning section 7c searches pairs of points in the reference point group data for all points in the target point group data obtained from the measurement of ignition coil 3 and fuel tube 4, and performs detailed alignment of the point group data as reference with the point group data as a target. Fuel tube 4 that is a non-rigid body is regarded as a rigid body here, and an average alignment is performed within the length of fuel tube 4. The detailed alignment by second aligning section 7c can be performed by using a well-known appropriate algorithm.

Third aligning section 7d performs so-called non-rigid-body alignment in consideration of deformation for a component that is a non-rigid body (fuel tube 4 in the present embodiment), after the detailed alignment by second aligning section 7c. Here, although a well-known appropriate algorithm can be used, for example, third aligning section 7d searches a nearest neighbor pair from the point group data of reference and the point group data of a target, which are aligned in advance as a rigid body, and obtains the parameters of rotation, expansion and translation, as parameters for bringing the two points of the pair closer to each other. For example, the outer shape of fuel tube 4 is downsampled to form an outer surface with multiple triangles with vertices and edges, and the vertices representing each point group (cluster) in each downsampled region, i.e., each region containing a plurality of adjacent triangles, with the constraint that the length of the edges does not change (technically, a change in length is minimum), and the deformation of the cluster is decomposed into rotation, expansion and translation parameters. The deformation of entire fuel tube 4 is obtained as a collection of such a deformation in a cluster unit. Third aligning section 7d performs the alignment of the reference point group data for fuel tube 4 with the target point group data in space while deforming the reference point group data for fuel tube 4 by a non-rigid-body aligning method that takes such a deformation into account.

Reliability degree calculation section 7e calculates the degree of reliability to the alignment of each component (that is, ignition coil 3 and fuel tube 4) as a target. In other words, reliability degree calculation section 7e calculates the degree of reliability that indicates how much the target point group data fits in the vicinity of the aligned reference point group data for each of ignition coil 3 and fuel tube 4.

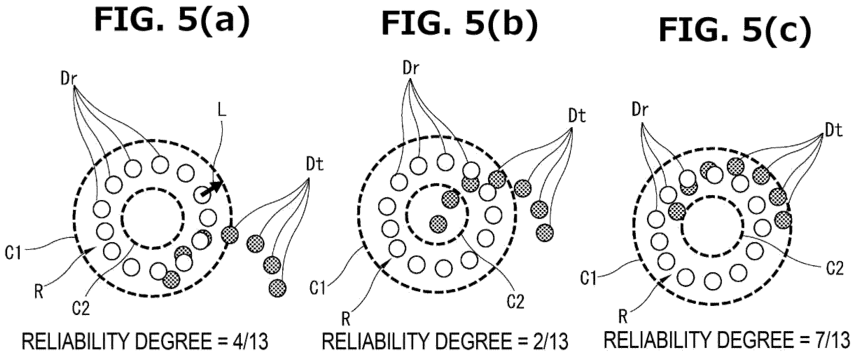

FIG. 5 is an illustrative view schematically showing the point group data of fuel tube 4 after the alignment to explain the degree of reliability. Here, it is assumed that the circular outer surface of fuel tube 4 at a certain cross-section is formed by 13 point group data, in order to simplify the explanation. Thirteen point group data Dr arranged in a circle are reference point group data based on the design data, and seven point group data Dt arranged in a semicircle are the target point group data based on the measurement data. For example, as a result of the performing of the scanning only from the upper side of the drawing by three-dimensional laser scanner 5, the lower half is the region that was not scanned (deficient region), and the target point group data Dt are arranged in a semicircle.

The reliability degree is indicated, for example, by the ratio of the number of points of the reference point group data Dr to the number of points of the target point group data Dt included within a range of a radius L from each point of reference point group data Dr. In addition, in the drawing, the range of radius L from a plurality of points of the reference point group data is shown by an outer circle C1 and an inner circle C2 each shown by dashed lines. In the example of FIG. 5(a), four target point group data Dt are included within range R of circles C1 and C2, and the reliability degree is 4/13. In addition, in the example of FIG. 5(b), two point target group data Dt are included within range R of circles C1 and C2, and the reliability degree is 2/13. In the example shown in FIG. 5(c), all of the points of the target, namely, seven point group data Dt are included within range R, and the reliability degree is 7/13. In this way, the reliability degree is affected by both of the accuracy of the alignment and the size or percentage of the deficient region in the measurement data.

First interpolation section 7f interpolates a missing part that is not scanned in the measurement data of ignition coil 3, namely, the point group data of the target, with the point group data of the reference. That is, the outer surface part on the back side (lower side) of ignition coil 3 which is hidden from the view from the upper side of engine room 1 is interpolated with the point group data of the reference, so as to generate point group data including the hidden part. Then, first interpolation section 7f converts the generated point group data to mesh data that constitutes a surface using a well-known conversion method.

Similarly, second interpolation section 7g interpolates a missing part that is not scanned in the measurement data of fuel tube 3, namely, the point group data of the target, with the point group data of the reference. That is, the outer surface part on the back side (lower side) of fuel tube 4 which is hidden from the view from the upper side of engine room 1 is interpolated with the point group data of the reference, so as to generate the point group data of fuel tube 4 including the hidden part. Then, second interpolation section 7g converts the generated point group data to mesh data that constitutes a surface using a well-known conversion method.

Distance calculation section 7h calculates the distance from each point on the surface of ignition coil 3 to each point on the surface of fuel tube 4, based on the mesh data of ignition coil 3 obtained by first interpolation section 7f and the mesh data of fuel tube 4 obtained by second interpolation section 7g. Further, distance calculation section 7h obtains the minimum distance by comparing each calculated distance to each other. In addition, distance calculation section 7h may calculate a distance from each point of ignition coil 3 to each point of fuel tube 4, based on each point group data without converting the point group data of ignition coil 3 and the point group data of fuel tube 4 into mesh data. In addition, distance calculation section 7h compares the minimum distance with a predetermined threshold value, and presents information to a worker that the minimum distance is less than the threshold value when the minimum distance is less than the threshold value. When presenting the information to a worker that the minimum distance is less than the threshold value, in addition to presentation through images using the above-mentioned display, it may be presented audibly using an audio equipment such as a speaker, or the information presentation may be performed by vibration using a scanner held by a worker with a hand or a wearable device such as a watch worn by a worker. When the information presentation is performed by vibration, the information may be presented whether the minimum distance is equal to or higher or less than the threshold value by a predetermined pattern of vibration.

Displacement amount calculation section 7i quantitatively calculates a moving amount required for fuel tube 4 at a location where the distance is minimum and at some representative points, that is, the amount of displacement of fuel tube 4 required for the minimum distance to be a threshold value or higher, when the minimum distance is less than a predetermined threshold value, and presents the information to display 8.

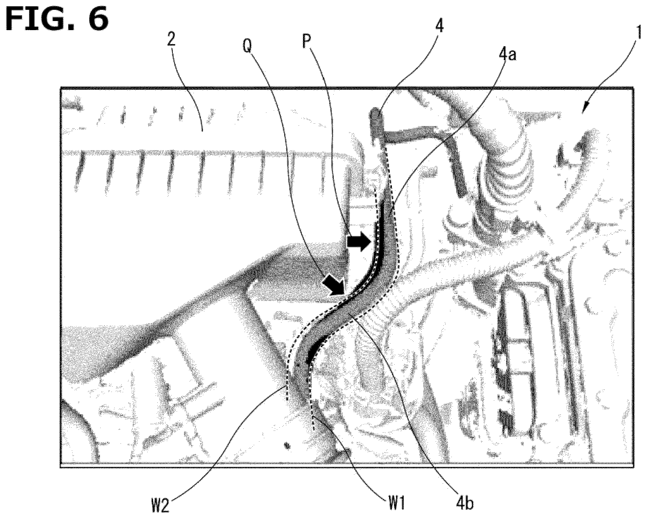

Display 8 displays the minimum distance between ignition coil 3 and fuel tube 4 and its location together with the displacement amount required for fuel tube 4. In addition, a desirable arrangement for fuel tube 4 in engine room 1 is shown on display 8 by the region between two curved lines W1 and W2 shown by broken lines in FIG. 6, and a worker sets fuel tube 4 into the region between curved lines W1 and W2 by displacing fuel tube 4 based on the displacement amount shown on display 8 which is not shown in the drawings, when the minimum distance is less than a threshold value. In addition, a part shown by a dark color which is adjacent to the side of fuel tube 4 indicates a part of fuel tube 4 before fuel tube 4 is displaced by a worker. In the present embodiment, as shown in FIG. 6, displacement amount calculation section 7i shows the displacement amount of 20mm in a direction P away from intake manifold 2 for one point on straight section 4a linearly extending along the side of intake manifold 2, and shows the displacement amount of 10mm along another direction Q away from intake manifold 2 for one point on inclination section 4b inclined toward ignition coil 3 (see FIG. 1). In addition, in FIG. 6, although the minimum distance and the location of the minimum distance are omitted from the illustration, the location of the minimum distance is located between diagonally down to the left from the part of inclination section 4b where the displacement amount is applied in direction Q and ignition coil 3 (see FIG. 1).

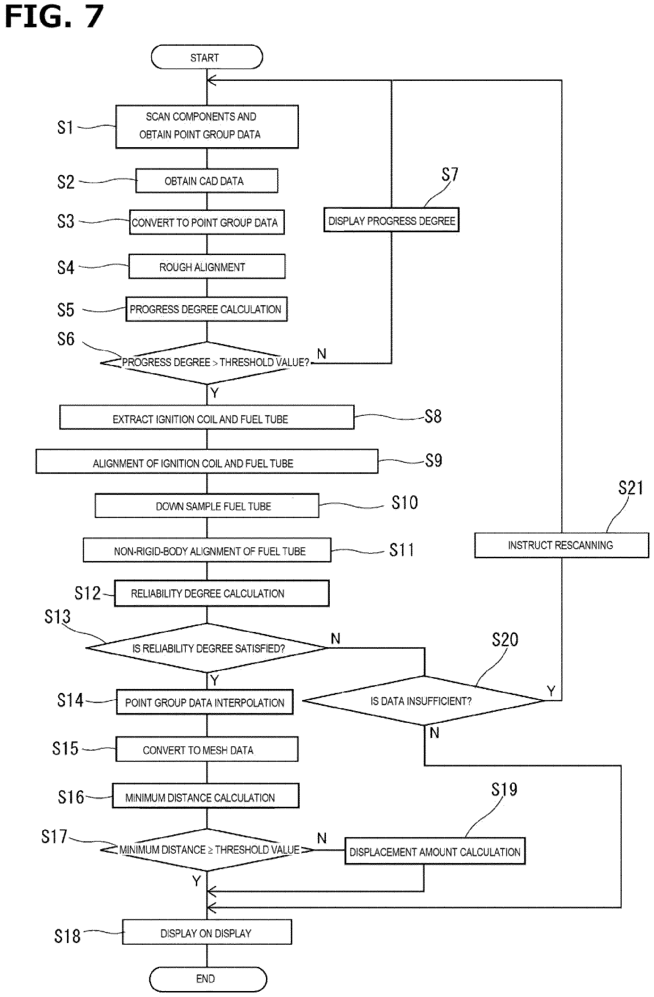

Next, a clearance inspection method of the present invention will be explained based on the flowchart in FIG. 7.

First, in a step S1, by the operation of three-dimensional laser scanner 5 by a worker, a predetermined region within engine room 1 including ignition coil 3 and fuel tube 4 as target components is scanned from the outside, and point group data including part of the outer surface of each component is obtained. This scanning and the generation of the point group data gradually progress with the scanning operation.

Next, in a step S2, CAD data of ignition coil 3 and fuel tube 4 as target components and other components around them are obtained together with CAD data indicating their spatial positional relationship from database 6.

Then, in a step S3, by using a well-known suitable conversion method, the CAD data is converted to point group data.

Next, in a step S4, as first aligning section 7a mentioned above, rough alignment of the entire target region with the entire reference region is performed. As mentioned above, rough alignment of the point group data of the entire region including ignition coil 3, fuel tube 4 and other components with the point group data of the entire region including ignition coil, fuel tube and other components in the design data stored in database 6 is performed by searching for key points and a combination of paired key points.

After the rough alignment in step S4, in a step S5, as progress degree calculation section 7b, the scanning progress degree is calculated from the ratio of the number of points of the point group data of the region as reference to the number of matched points of the point group data of the scanned region.

Then, in a step S6, it is determined whether or not the progress degree exceeds a predetermined progress degree threshold value (in the present embodiment, although it is 40%, the threshold value is not limited to this). When the progress degree is equal to or less than 40%, the step proceeds to a step S7, and the progress degree is displayed on display 8, and the scanning by a worker is continued. That is, the process from step S1 is repeated.

In addition, when the progress degree exceeds 40% in step S6, the step proceeds to a step S8, and the point group data of each of ignition coil 3 and fuel tube 4 as target components is extracted from the point group data of the measurement data and the point group data of the design data. The point group data extracted from the measurement data is a so-called target, and the point group data extracted from the design data is so-called reference. The point group data of a target component as reference may be generated from CAD data of a single component.

Next, in a step S9, as second aligning section 7c, by using a well-known appropriate algorithm, the detailed alignment of ignition coil 3 and fuel tube 4 is performed. Here, fuel tube 4 is regarded as a rigid body. For example, as mentioned above, points that make a pair between the target point group data and the reference point group data which have gone through the rough alignment are searched, and the detailed alignment is performed such that the reference is closer to the target.

Next, third aligning section 7d mentioned above performs the down-sample of the data of fuel tube 4 in a step S10, in order to perform the non-rigid-body alignment of fuel tube 4 that is a non-rigid body. Then, in a step S11, the non-rigid-body alignment in consideration of the deformation of fuel tube 4 is performed. That is, the reference point group data is aligned to a target position while deforming it. In the non-rigid-body alignment, as mentioned above, nearest neighbor pair is searched from the reference point group data and the target point group data, which are aligned when fuel tube 4 is regarded as a rigid boy as mentioned above, and rotation, expansion, and translation are obtained as parameters to bring them closer to each other.

Next, the step proceeds to a step S12, and the reliability degree of the alignment of each of ignition coil 3 and fuel tube 4 is calculated. The reliability degree is shown as the ratio of the number of points of the reference point group data and the number of points of the target point group data included within a range of a predetermined radius from each point of the reference point group data.

Then, in step S13, it is determined whether or not the reliability degree of the alignment of ignition coil 3 and the reliability degree of the alignment of fuel tube4 each satisfy a predetermined reliability degree. When both of the reliability degrees satisfy the predetermined reliability degree, it is determined that the alignment is completed, and the step proceeds to a step S14.

In step S14, as first interpolation section 7f and second interpolation section 7g, the unscanned parts of the point group data of targets of ignition coil 3 and fuel tube 4 are interpolated with the point group data of reference aligned to the targets. With this, the point group data of ignition coil 3 and fuel tube 4 which include the unscanned parts (for example, hidden parts) at the respective target positions are generated.

Then, in a step S15, by using a well-known conversion method, for both of ignition coil 3 and fuel tube 4, the point group data including unscanned parts is converted to mesh data that constitutes a surface.

Next, in a step S16, as distance calculation section 7h, the minimum distance between ignition coil 3 and fuel tube 4 is calculated based on the mesh data of ignition coil 3 and the mesh data of fuel tube 4. That is, the distance between optional two points on each surface is obtained, and the minimum value among them is set as the minimum distance.

Then, in a step S17, it is determined whether or not the minimum distance is equal to or higher than a threshold value. When the minimum distance is equal to or higher than the threshold value, the step proceeds to a step S18, and the information that the minimum distance is equal to or higher than the threshold value is displayed on display 8.

In addition, when the minimum threshold value is less than the threshold value in step S17, the step proceeds to a step S19, and displacement amount calculation section 7i calculates the displacement amount of fuel tube 4 which is required for the minimum distance to be the threshold value or higher. The calculated displacement amount is displayed on display 8.

In addition, when the reliability degree is less than a predetermined reliability degree in step S13, the step proceeds to a step S20, and it is determined whether or not the scanned data is insufficient. When the data is insufficient, the step proceeds to a step S21, and it is presented to a worker that scanning needs to be done again by three-dimensional laser scanner 5, and the step is returned to step S1.

In addition, when it is determined that the data is not insufficient in step S20, fuel tube 4 is excessively deformed and the reliability is determined to be low in step S13, and the step proceeds to step S18 to indicate this on display 8.

As mentioned above, in the present embodiment, by manual operation of three-dimensional laser scanner 5, the region including the ignition coil and the fuel tube is scanned from outside to obtain the measurement data including a part of the outer surface of each of the both components, as first aligning section 7a, the region including ignition coil 3 and fuel tube 4 in the design data is roughly aligned with the region including ignition coil 3 and fuel tube 4 in the measurement data, and then, based on this rough alignment, the calculation for the progress degree of the scanning by three-dimensional laser scanner 5 is continued. Then, when the progress degree exceeds a predetermined progress degree threshold value, the information is presented on display 8 that the progress degree exceeds a predetermined progress degree threshold value. With this, the process moves to the next stage in the component inspection as soon as the progress degree exceeds a progress degree threshold value, without waiting for the scanning of the entire region mentioned above to be completed. Therefore, as compared to a case where the process moves to the next stage after the scanning of the entire region is completed, the time required for the component inspection can be reduced.

In addition, in the present embodiment, after the rough alignment by first aligning section 7a, as progress degree calculation section 7b, the progress degree of the scanning is calculated from the ratio of the number of points of the point group data in the target region based on the design data as reference to the number of points matched to each other between the reference and the target by the rough alignment by first aligning section 7a. Consequently, by obtaining the above ratio by the number of points of the point group data based on known design data and the number of the matched points obtained by the rough alignment, the progress degree of the scanning can be calculated efficiently.

Further, in the present embodiment, the progress degree of the scanning is calculated based on the scanned distance by three-dimensional laser scanner 5. As mentioned above, since the basic shape of the region to be a target of the scanning is known by database 6, it is possible to estimate the moving locus of three-dimensional laser scanner 5 based on the point group data sequentially obtained from three-dimensional laser scanner 5. Then, the progress degree of the scanning can be calculated based on how much of the distance scanned by three-dimensional laser scanner 5 is included with respect to the length of the moving locus.

In addition, in the present embodiment, the progress degree of the scanning is calculated based on the number of viewpoints where three-dimensional laser scanner 5 has passed. Accordingly, the progress degree of the scanning can be obtained based on how many representative viewpoints three-dimensional scanner 5 has passed until drawing the moving locus.

Moreover, in the present embodiment, the progress degree of the scanning is calculated based on the number of key points used in the rough alignment. As mentioned above, the maximum number of the key points is determined based on the point group data converted from the design data, and by obtaining the percentage of the key points based on the point group data converted from the measurement data relative to the maximum number of those key points, the progress degree of the scanning can be calculated.

In addition, in the present embodiment, after the progress degree exceeds a progress degree threshold value, the design data of the ignition coil and the fuel tube is aligned with the position of the measurement data of ignition coil 3 and fuel tube 4 in detail. Accordingly, since the region including ignition coil 3 and fuel tube 4 should be scanned for a relatively short period of time until the progress degree exceeds a progress degree threshold value, the detailed alignment of ignition coil 3 and fuel tube 4 that are target components only can be performed at an early stage.

As the above, although one embodiment in which the present invention is applied to the measurement for the clearance between ignition coil 3 and fuel tube 4 in a vehicle has been explained, the present invention is not limited to such an application, and can be widely applied to inspection related to the spatial arrangement state of a target component in an assembly including a plurality of components. Although, in the above embodiment, the distance between two components is measured, the present invention can also be applied even if there is only one target component.

In addition, in the present embodiment, although an example for non-rigid-body alignment for fuel tube 4 having a circular shape in radial cross section has been explained, the present invention may be applied to non-rigid-body alignment for a pipe having, for example, a rectangular shape in radial cross section, other than a circular shape.

In addition, in the above embodiment, although an example where three-dimensional laser scanner 5 is hand-held by a worker has been explained, the present invention can also be applied to a case where a robot performs scanning with a three-dimensional sensor.

In addition, in the present embodiment, although three-dimensional laser scanner 5 has been explained as a three-dimensional sensor, other types of sensors such as a ToF type and triangulation methods such as stereo cameras, can be widely applied.

## Claims

1. A component inspection method for performing inspection related to a spatial arrangement state of at least one component as a target in an assembly formed by assembling a plurality of components, the method comprising:
gradually obtaining a measurement data including a part of an outer surface of the target component by scanning a region including the target component from outside by a three-dimensional sensor;
obtaining a design data including an outer shape of the target component and a positional relationship of the target component in the assembly;
aligning the region including the target component in the design data with the region including the target component in the measurement data;
calculating a progress degree which indicates a degree to which the scanning has progressed, based on the alignment;
comparing the progress degree to a predetermined threshold value; and
presenting an information that the progress degree exceeds the threshold value, when the progress degree exceeds the threshold value.

2. The component inspection method according to claim 1, wherein the measurement data and the design data are each converted to a point group data,
wherein the alignment includes aligning the region including the target component in the point group data based on the design data with the region including the target component in the point group data based on the measurement data, and
wherein the calculation of the progress degree includes calculating the progress degree from a ratio of a number of points of the point group data in a target region based on the design data to a number of points matched to each other between the point group data based on the design data and the point group data based on the measurement data.

3. The component inspection method according to claim 1, wherein the calculation of the progress degree includes calculating the progress degree based on a distance scanned by the three-dimensional sensor.

4. The component inspection method according to claim 1, wherein the calculation of the progress degree includes calculating the progress degree based on a number of viewpoints where the three-dimensional sensor has passed.

5. The component inspection method according to claim 1, further comprising:
each converting the measurement data and the design data to a point group data; and
searching for key points of each of the converted point group data and describing characters of the key points,
wherein the alignment includes comparing the characters of the key points related to the point group data of the design data to the characters of the key points related to the point group data of the measurement data, and
wherein the calculation of the progress degree includes calculating the progress degree based on a number of the key points used in the alignment.

6. The component inspection method according to claim 1, further comprising aligning the design data of the target component with a position of the measurement data of the target component, after the progress degree exceeds the threshold value.

7. A component inspection device for performing inspection related to a spatial arrangement state of at least one component as a target in an assembly formed by assembling a plurality of components, comprising:
a three-dimensional sensor configured to gradually obtain a measurement data by scanning a region including the target component from outside;
a database configured to store a design data including an outer shape of the target component and a positional relationship of the target component in the assembly;
an aligning section configured to align the design data of the target component with a position of the measurement data of the target component;
a progress degree calculation section configured to calculate a progress degree which indicates a degree to which the scanning has progressed, based on the alignment by the aligning section; and
a device configured to present an information that the progress degree exceeds a predetermined threshold value, when the progress degree exceeds the threshold value.
